# EUROPEAN PATENT APPLICATION

(11) **EP 1 541 415 A1**
(43) Date of publication of application: **15.06.2005**
(21) Application number: 04106476.7
(22) Date of filing: 10.12.2004
(51) Int. Cl.: B60Q 1/34, B60Q 1/26

(54) **Method and device for controlling the direction indicators of a vehicle**

(30) Priority: 12.12.2003 IT TO20031002
(71) Applicant: FIAT AUTO S.p.A., 10135 Torino (IT)
(72) Inventor: Marchesani, Claudio, I-10135 Torino (IT)
(74) Representative: Jorio, Paolo, Dr. Ing.

(57) **Abstract**

Method of controlling the direction indicators (4, 5) of a vehicle in which an control lever (2) can be moved by the driver from a rest position (6) in a first direction (7) for activating first direction indicators (4) associated with a first side of the vehicle and in a second direction (8) for activating second direction indicators (5) associated with a second side of the vehicle. The method comprises the detection of a user command (C₁) given by the driver by means of the control lever (2); the establishment of a first standard control mode in which the first or the second direction indicators (4, 5) provide a corresponding visual indication (I₁) in the presence of the user command (C₁); or the establishment of a second, timed, control mode in which the first or the second direction indicators (4, 5) provide a corresponding visual indication (I₁) for a predetermined time interval following the user command (C₁). The method also comprises the detection, in the second, timed, control mode, of a further command (C₂) in a direction opposite that of the preceding user command (C₁), for providing additional control of the direction indicators in use.

## Description

The present invention relates to a method and a device for controlling the direction indicators of a vehicle.

In particular, the present invention can be applied advantageously to motor vehicles, to which the following description will refer expressly without thereby forfeiting its general application.

As is known, direction indicators, typically consisting of lamps, are provided on the exterior of motor vehicles to signal changes of direction of the said vehicles.

In particular, each motor vehicle generally has three direction indicators on each side, which are activated in synchronization and are located at the front, within the headlight cluster; at the rear, within the rear light cluster; and on the side, in the front part of the side.

These direction indicators are usually operated by means of a control lever extending from the steering column control unit of the motor vehicle.

In particular, the control lever is normally in a rest position and can be moved in a first direction, upwards for example, to activate the direction indicators located on a first side of the vehicle, for example the right-hand side with respect to the direction of travel, and in a second direction opposite the first, downwards for example, to activate the direction indicators located on the opposite side of the vehicle, in this example the left-hand side with respect to the direction of travel.

Commonly, in order to signal a change in the direction of travel, the driver of the motor vehicle moves the control lever from the rest position in the first or second direction to activate the corresponding direction indicators, and then at the end of the manoeuvre the control lever is returned to the rest position by a further movement and/or by means of an automatic return system connected to the steering unit.

An improved device for controlling the direction indicators has recently been implemented in some motor vehicles.

With this control device, the direction indicators can be operated in a first, standard, mode, in which, as described above, the direction indicators are switched off at the end of the steering manoeuvre, and in a second mode, called the timed mode, in which the previously activated direction indicators are switched off automatically after a predetermined period, for example after a certain number of flashes completed by the said direction indicators.

The object of the present invention is to provide a method and a device for controlling the direction indicators of a vehicle which constitute a further improvement to the prior art.

According to the present invention, therefore, a method for controlling the direction indicators of a vehicle has been devised, as specified in Claim 1.

According to the present invention, a device for controlling the direction indicators of a vehicle is also provided, as specified in Claim 7.

To enable the present invention to be understood more clearly, a preferred embodiment of the invention will now be described, purely by way of example and without restrictive intent, with reference to the attached drawings, in which:
- Figure 1 is a schematic representation of a device for controlling the direction indicators of a vehicle, constructed according to a preferred embodiment of the invention;
- Figures 2 and 3 show the variations with time of certain values relating to the diagram of Figure 1; and
- Figure 4 shows a flow diagram for the control method devised according to the principles of the present invention.

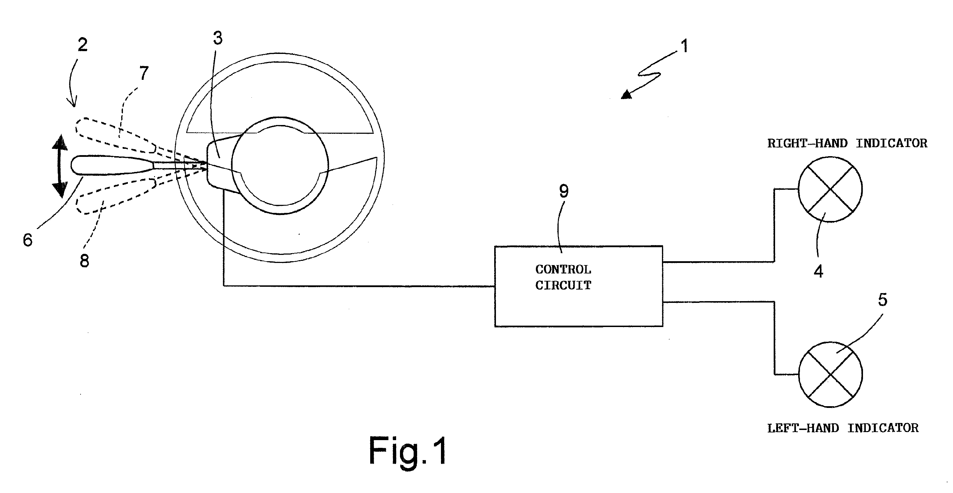

In Figure 1, the number 1 indicates the whole of a device for controlling the direction indicators of a motor vehicle, constructed according to a preferred embodiment of the invention.

In particular, the control device 1 comprises a control lever 2, typically in the form of an indicator and headlight control lever, extending from a steering column control unit 3 of the vehicle and capable of activating first and second direction indicators 4, 5 (indicated schematically), located on a first and a second side of the vehicle.

In detail, the control lever 2 can be moved by the driver of the vehicle from a rest position 6 (indicated in solid lines in Figure 1) in a first direction 7 for activating the first direction indicators 4 located on the first side of the vehicle, for example the right-hand side, and in a second direction 8, opposite the first, for activating the second direction indicators 5 located on the second side of the vehicle, for example the left-hand side.

The control device 1 also comprises a control circuit 9 connected to the steering column control unit 3, comprising logic and timing circuits and receiving from the steering column control unit 3 signals relating to a command given by the driver of the vehicle by means of the control lever 2, for the purpose of making the first and second direction indicators 4 and 5 flash in response to these signals.

The control method implemented by the control device 1 comprises, in the first place, the automatic selection of a first or a second control mode of the direction indicators 4 and 5, according to the duration of the command given by the driver by means of the control lever 2, corresponding to the movement of the control lever 2 in the first or the second direction 7, 8.

In particular, if the duration of this command is greater than or equal to a first predetermined time interval, for example 3 seconds, the control device 1 activates a first control mode, called the standard mode, in which the first or the second direction indicators 4, 5 flash until the driver returns the control lever 2 to the rest position 6.

However, if the duration of the command given by the driver is less than the first predetermined time interval, in other words if the driver returns the control lever 2 to the rest position 6 in a period which is, for example, less than 3 seconds, the control device 1 activates a second control mode, called the timed mode, in which the first or second direction indicators 4, 5 flash for a predetermined time interval (for example, approximately 3 seconds, corresponding, for example, to six full flashes) and are then switched off automatically.

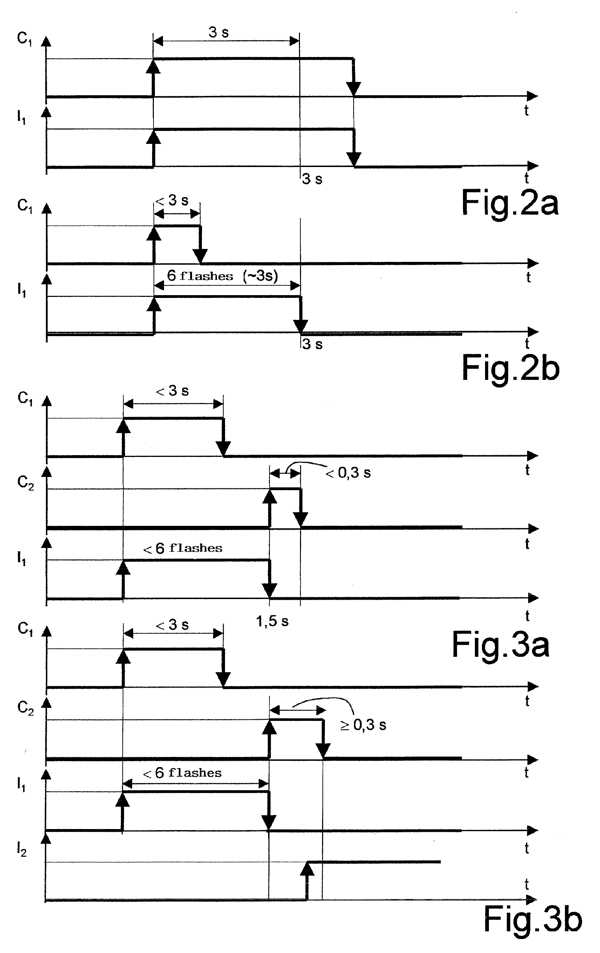

Figures 2a and 2b show timing diagrams for the activation of the first and second direction indicators 4, 5 in the two control modes described above. In particular, Figure 2a relates to the first, standard, control mode, while Figure 2b relates to the second, timed, control mode.

In both figures, the command given by the driver by means of the control lever 2 in the first or second direction 7, 8 is indicated by C₁, while the corresponding visual indication (flashing) of the first or second direction indicators 4, 5 respectively is indicated by I₁.

As shown in Figure 2a, if the duration of the command C₁ is greater than 3 seconds, the corresponding visual indication I₁ is provided while the said command C₁ remains present, and therefore the duration of the flashing of the first or second direction indicators 4, 5 is determined by the driver.

However, if, as shown in Figure 2b, the duration of the command C₁ is less than 3 seconds, the corresponding visual indication I₁ terminates automatically after six flashes of the direction indicators 4 or 5, in other words after approximately 3 seconds.

The control method devised according to the principles of the present invention also makes it possible to identify, in the second, timed, control mode, a new command C₂ given by the driver by moving the control lever 2 in the opposite direction to that of the command C₁ given previously. According to the duration of the new command C₂, the control device 1 either simply switches off the direction indicators currently active as a result of the preceding command, or activates the other direction indicators in place of the indicators currently in use.

In detail, as shown in Figure 3a, if, in the second, timed, control mode of the first direction indicators 4, for example, established by a preceding command C₁ and associated with a first visual indication I₁, a new command C₂ in the opposite direction to the first command C₁ is detected, and if the duration of the new command is less than a predetermined time interval, for example 0.3 second, the control device 1 switches off the direction indicators 4 in use and stops the corresponding visual indication I₁.

Conversely, as shown in Figure 3b, if the duration of the new command C₂ is greater than or equal to 0.3 second, the control device 1 switches off the direction indicators 4 in use, and therefore stops the corresponding visual indication I₁, and then activates the direction indicators 5 opposite those in use, thus activating a new visual indication I₂, which in turn will have an activation mode which depends on the duration of the new command C₂, in a similar way to that described previously.

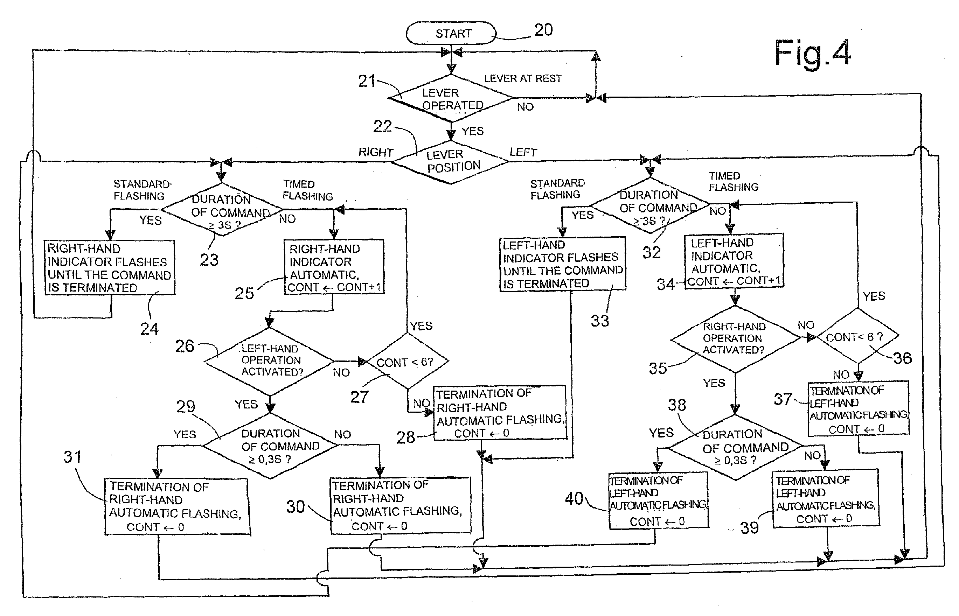

Figure 4 shows a flow diagram which illustrates in detail the steps into which the previously described control method for the first and second direction indicators 4, 5 can be divided, and in which the number 20 indicates the start block of the said method.

From the start block 20, the processing moves to block 21 in which a check is made as to whether the control lever 2 has been moved from the rest position 6.

If this is not the case, a return is made to the start block 20, but otherwise processing moves to block 22 in which the direction of movement of the control lever 2 is determined.

Two substantially identical branches of the flow diagram, corresponding to the first direction 7 and the second direction 8 in which the control lever 2 can be moved, lead from this block.

If the control lever 2 is found to have been moved in the first direction 7, corresponding to the activation of the first direction indicators 4 on the right-hand side of the vehicle, the next block is block 23, in which the duration of the command C₁ given by the driver by means of the said control lever 2 is determined.

If the duration of this command is greater than or equal to 3 seconds, the next block is block 24, relating to the first, standard, control mode of the direction indicators, in which the direction indicators 4 are made to flash until the control lever 2 is returned to the rest position 6, after which a return is made to the start block 20.
However, if the duration of the command C₁ is less than 3 seconds, processing moves from block 23 to block 25, relating to the second, timed, control mode of the direction indicators, in which the direction indicators 4 are made to flash and are switched off automatically. In particular, in block 25 a counter of the number of flashes completed automatically by the direction indicators 4, indicated by CONT, is incremented by one unit.

Block 25 leads to block 26, in which it is determined whether a new command C₂ has been given by the driver by moving the control lever 2 in the second direction 8, opposite that of the direction of the command given previously.

If this is not the case, processing moves to block 27 in which it is determined whether the counter CONT which indicates the number of flashes already completed is less than six, equal to the maximum number of flashes completed automatically in the second, timed, control mode. If the number of flashes completed does not exceed the maximum permitted number, a return is made to block 25, in which the counter CONT is incremented by one unit, and then to block 26 to look for a new command C₂ given by means of the control lever 2. Otherwise, processing moves to block 23 in which the first direction indicators 4 in use are automatically switched off and the counter CONT is reset to zero, after which a return is made to the start block 20.

However, if the presence of a new command C₂ given by the driver by means of the control lever 2 is detected in block 26, processing moves to block 29, in which the duration of the said new command C₂ is determined.

If this duration is less than 0.3 second, processing moves to block 30, in which the flashing of the first direction indicators 4 in use is terminated before the expiry of the time interval specified by the second, timed, control mode, and the counter CONT is reset to zero, and a return is then made to the start block 20. Otherwise, that is to say if the duration of the new command C₂ is greater than or equal to 0.3 second, processing moves to block 31, in which the flashing of the first direction indicators 4 in use is again terminated and the counter CONT is reset to zero, and processing then moves to the second branch of the flow diagram, relating to the second direction 8 in which the control lever 2 can be moved.

From this block 31, processing moves to the block 32, which is also reached from block 22 if the control lever 2 is moved in the second direction 8, and the duration of the command which has been given is again determined.

If the duration of this command is greater than or equal to 3 seconds, processing moves to block 33, relating to the first, standard, control mode of the direction indicators, in which the second direction indicators 5 are made to flash until the control lever 2 is returned to the rest position 6, after which a return is made to the start block 20.

However, if the duration of the command is less than 3 seconds, processing moves from block 32 to block 34, relating to the second, timed, control mode of the direction indicators, in which the second direction indicators 5 are made to flash automatically. In particular, a counter CONT of the number of flashes completed automatically by the second direction indicators 5 is incremented by one unit in block 34.

Processing moves from block 34 to block 35, in which it is determined whether a new command given by the driver in the first direction 7, opposite that of the command given previously, is present on the control lever 2.

If this is not the case, processing moves to block 36 in which it is determined whether the counter CONT indicating the number of flashes already completed is less than six, equal to the number of flashes completed automatically in the second, timed, control mode. If the number of flashes completed does not exceed the maximum permitted number, a return is made to block 34 in which CONT is incremented by one unit and processing then moves to block 35 to look for a new command. Otherwise, processing moves to block 37 in which the second direction indicators 5 in use are switched off automatically and the counter CONT is reset to zero, after which a return is made to the start block 20.

However, if the presence of a new command given by the driver by means of the control lever 2 is found in block 35, processing moves to block 38, in which the duration of the said new command is determined.

If this duration is less than 0.3 second, processing moves to block 39, in which the flashing of the second direction indicators 5 in use is terminated and the counter CONT is reset to zero, and a return is then made to the start block 20. Otherwise, that is to say if the duration of the new command is greater than 0.3 second, processing moves to block 40, in which the flashing of the second direction indicators 5 in use is again terminated and the counter CONT is reset to zero, after which a return is made to block 23, from which the operations described previously start again in respect of the first direction 7 of movement of the control lever 2 and the flashing of the first direction indicators 4.

An examination of the characteristics of the method and device for controlling the direction indicators of a vehicle according to the present invention will clearly reveal the advantages which they provide.

In particular, the fact that the first or the second control mode of the direction indicators of the vehicle can be activated alternatively enables the driver to signal longer manoeuvres, such as reversing, in a different way from shorter manoeuvres, such as a change of direction.

Additionally, since the position of the control lever of the direction indicators of the vehicle is constantly monitored, even during the execution of a preceding timed command, the driver can signal a change in the direction of travel which occurs immediately after a preceding change, by interrupting the previously active signal. This facility is particularly advantageous, for example, in a case where a sudden return to a lane has to be signalled after an abrupt detour made to avoid an obstacle.

In particular, in this case the driver will initially activate the direction indicators on the left-hand side of the vehicle in timed mode to signal the passing of the obstacle, and then, within a time interval of less than 3 seconds for example, will activate the direction indicators on the right-hand side, to indicate a return to the lane.

Finally, it is clearly possible to modify and vary the method of controlling the direction indicators of a vehicle described and illustrated herein, without thereby departing from the scope of protection of the present invention, as specified in the attached claims.

## Claims

1. Method of controlling the direction indicators (4, 5) of a vehicle in which a control lever (2) can be moved by the driver from a rest position (6) in a first direction (7) for activating first direction indicators (4) associated with a first side of the vehicle and in a second direction (8) for activating second direction indicators (5) associated with a second side of the vehicle, the said method comprising the steps of:
- detecting a user command (C₁) given by the driver by means of the said control lever (2);
- establishing a first, standard, control mode in which the said first or the said second direction indicators (4, 5) provide a corresponding visual indication (I₁) in the presence of the said user command (C₁) ;
- establishing a second, timed, control mode in which the said first or the said second direction indicators (4, 5) provide a corresponding visual indication (I₁) for a predetermined time interval following the said user command (C₁);
**characterized in that** it comprises the step of detecting, during the said second, timed, control mode, a further command (C₂) in a direction opposite that of the preceding user command (C₁), for providing additional control of the direction indicators in use.

2. Method according to Claim 1, additionally comprising the steps of:
- determining the duration of the said further user command (C₂); and
- switching off the direction indicators (4) in use when the said duration has a first relation to a predetermined threshold.

3. Method according to Claim 1 or 2, additionally comprising the steps of:
- determining the duration of the said further user command (C₂); and
- switching off the direction indicators (4) in use and activating the other direction indicators (5) when the said duration has a second relation to a predetermined threshold.

4. Method according to Claim 2, in which the said first relation is present when the said duration of the said further command (C₂) is less than the said predetermined threshold.

5. Method according to Claim 3, in which the said second relation is present when the said duration of the said further command (C₂) is greater than or equal to the said predetermined threshold.

6. Method according to Claim 1, in which the said first, standard, control mode and the said second, timed, control mode are selected according to the duration of the said user command.

7. Device (1) for controlling the direction indicators of a vehicle (4, 5), in which an control lever (2) can be moved by the driver from a rest position (6) in a first direction (7) for activating first direction indicators (4) associated with a first side of the vehicle and in a second direction (8) for activating second direction indicators (5) associated with a second side of the vehicle,
the said device comprising:
- first detector means (21) for detecting a user command (C₁) given by the driver by means of the said control lever (2);
- first control means (24, 33) for a first, standard, control mode in which the said first or the said second direction indicators (4, 5) provide a corresponding visual indication (I₁) in the presence of the said user command (C₁);
- second control means (25, 34) for establishing a second, timed, control mode in which the said first or the said second direction indicators (4, 5) provide a corresponding visual indication (I₁) for a predetermined time interval following the said user command (C₁);
**characterized in that** it comprises second detector means (26, 35) which can be activated during the operation of the said second control means (25, 34) for detecting a further command (C₂) in a direction opposite that of the preceding user command (C₁), and for providing additional control of the direction indicators in use.

8. Device according to Claim 7, additionally comprising:
- calculating means (29, 38) for determining the duration of the said further user command (C₂); and
- third control means (30, 39) for switching off the direction indicators (4) in use when the said duration has a first relation to a predetermined threshold.

9. Device according to Claim 7 or 8, additionally comprising:
- calculating means (29, 38) for determining the duration of the said further user command (C₂); and
- fourth control means (31, 40) for switching off the direction indicators (4) in use and for activating the other direction indicators (5) when the said duration has a second relation to the said predetermined threshold.

10. Device according to Claim 8, in which the said first relation is present when the said duration of the said further command (C₂) is less than the said predetermined threshold.

11. Device according to Claim 9, in which the said second relation is present when the said duration of the said further command (C₂) is greater than or equal to the said predetermined threshold.

12. Device according to Claim 7, in which the said first, standard, control mode and the said second, timed, control mode are selected according to the duration of the said user command.
